# EUROPEAN PATENT APPLICATION

(11) **EP 0 665 419 A1**
(43) Date of publication of application: **02.08.1995**
(21) Application number: 95100532.1
(22) Date of filing: 17.01.1995
(51) Int. Cl.: G01D 18/00, G01D 5/16, G01P 21/00

(54) **An auto-calibration device for a bridge sensor**

(30) Priority: 28.01.1994 IT TO940045
(71) Applicant: MAGNETI MARELLI S.p.A., I-20145 Milano (IT)
(72) Inventor: Braschi, Enrico, I-27100 Pavia (IT)
(74) Representative: Quinterno, Giuseppe

(57) **Abstract**

In a Wheatstone bridge transducer (Z1, Z2, Z3, Z4), the balancing of the offset is effected in an automatic manner by a microcontroller (MP) which connects a plurality of resistors (R1, R2, R3), of decreasing values in parallel with one arm or the other of the bridge for the purpose of zeroing the offset itself.

## Description

The present invention relates in general to self-calibrating detector devices and more specifically relates to an auto-calibration device for a Wheatstone bridge.

In particular the invention has been developed specifically, although not exclusively, to solve the problem of auto-calibration necessary for balancing the offset in a piezo-resistive Wheatstone bridge sensor.

Such sensors are widely known in the art, and widely used for example as pressure or acceleration sensors. As is known they typically require to be calibrated before use in such a way that at rest the voltage across the terminals of the diagonal of the bridge is nil. This calibration operation is normally necessary since, because of the production technology, it is extremely difficult to create perfectly balanced bridges.

Moreover, since it is not possible directly to calibrate the resistors of the transducer, which are the components of the bridge, for the purpose of not compromising its stability in time, the arrangement normally adopted in the art consists of fitting two external resistors outside the transducer, in series or in parallel with one of the two arms of the bridge, so as to be able to perform calibrations of the bridge itself to achieve a complete balancing.

This method, which is normally the most practical, has however the disadvantage of being difficult to manage whenever it is desired to eliminate calibration of the resistors for the purpose of zeroing the offset at a microprocessor directly connected to the transducer. Until now it has in fact been always more common to use such transducers in association with digital systems with the use, therefore, of analogue-to-digital convertors and microprocessors.

The object of the present invention is that of providing a detection device which makes it possible to resolve all the above-indicated problems in a satisfactory manner.

According to the invention this object is achieved thanks to a detection device having the characteristics indicated in the Claims which follow the present description.

Further advantages and characteristics of the present invention will become evident from the following detailed description made with the aid of the attached drawing provided purely by way of non-limitative example, which is a schematic circuit representation of an embodiment of the device according to the present invention.

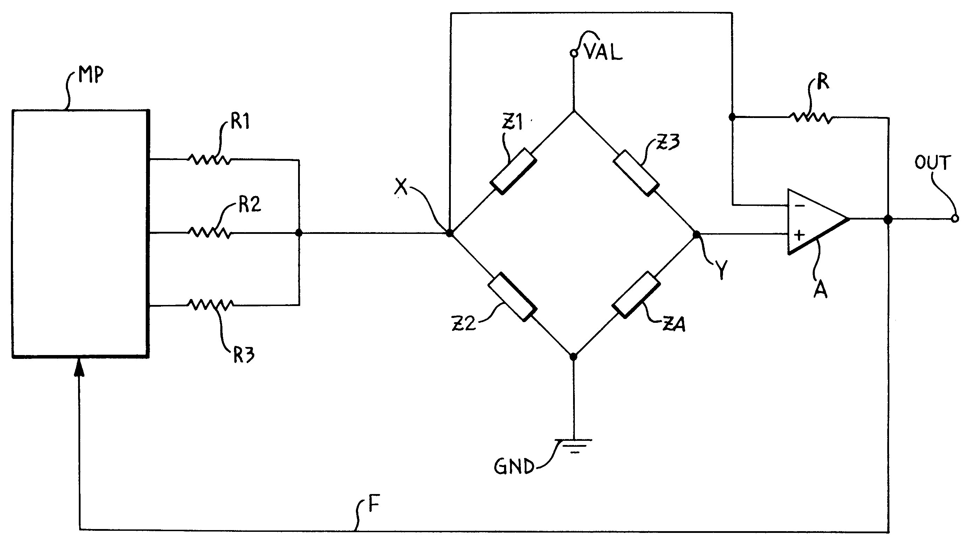

As can be seen in Figure 1 there is shown a classic bridge transducer constituted by resistors Z1, Z2, Z3, Z4. The bridge Z1, Z2, Z3, Z4 is naturally supplied at one vertex by a voltage source VAL whilst the opposite vertex is connected to ground GND. The other two vertices of the bridge, which are therefore the vertices of the diagonal, are denoted in the drawing with the symbols X and Y. As is known the balancing of the offset of the bridge requires that, at rest, there should be no potential difference between the nodes X and Y, that is to say the voltage between these two nodes should be nil.

For the purpose of performing this operation the device provides for the use of a microcontroller or microprocessor MP otherwise already provided for the normal operation for the detector device. The microcontroller MP is naturally supplied, typically through the same terminals VAL and GND which supply the bridge Z1, Z2, Z3, Z4. To be able to perform the balancing operation itself between the node X of the bridge and the microcontroller MP there are connected a plurality of resistors R1, R2, R3. These resistors R1, R2, R3 have one end connected to the node X whilst the other ends are connected each to a different terminal of the microcontroller MP.

The microcontroller MP is provided, internally or externally with switches able selectively to connect each of the resistors R1, R2, R3 either to the supply voltage VAL or to ground GND. By means of this configuration the microcontroller MP can therefore selectively connect each of the resistor R1, R2, R3 in parallel with the resistors Z1 of the bridge or in parallel with the resistor Z2 or possibly to leave them unconnected.

It is thus evident that in this way the microcontroller MP has available the means necessary to balance the offset of the bridge Z1, Z2, Z3, Z4. The precision with which the balancing can be achieved depends on the number and values of the plurality of resistors R1, R2, R3, (here represented only as three in number for simplicity) connected to the microcontroller MP. Naturally, the maximum value of offset which the microcontroller MP can correct also depends on these. To obtain an optimisation of the number of resistors necessary to achieve a good balancing precision their values can be proportioned according to an arithmetic progression or, preferably, according to a geometric progression, for example with the power of 2:1, 2, 4, 8,.....

The device further includes an amplifier, in this specific case an operational amplifier A, the inputs of which are connected respectively to the node X and to the node Y of the bridge Z1, Z2, Z3, Z4. The amplifier A, which is provided with a feedback resistor R, cancels the residual out-of-balance voltage present on the diagonal of the bridge Z1, Z2, Z3, Z4. On the output terminal OUT of the amplifier A there is therefore present a signal indicative of the residual voltage by which the diagonal is out of balance.

This signal is sent to the microcontroller MP via a conductor F. In this way, thanks to the feedback connection F the microcontroller MP, during an initial auto-calibration phase, is able to connect or disconnect the resistors R1, R2, R3, in parallel with the two arms of the bridge to achieve a balancing of the offset.

The balancing process is intuitive; if the voltage at the node X is greater than the voltage at node Y it is sufficient to connect one or more resistors R1, R2, R3, to ground GND, whilst in the opposite case they must be connected to the supply voltage VAL. To obtain the best balance possible the microcontroller MP can proceed, according to a widely known method, by successive approximation steps connecting and/or disconnecting resistors of decreasing value.

It is therefore evident how the device according to the present invention can arrive at an automatic balancing of the transducer, completely eliminating the initial operation of the prior art. This device moreover has the advantage of being able to perform this operation again at a later time without any difficulty, for example if it should be necessary to be able to replace the bridge or if the bridge becomes unbalanced.

Naturally, the principle of the invention remaining the same, the details of construction and the embodiments can be widely varied with respect to what has been described and illustrated, without by this departing from the ambit of the present invention.

## Claims

1. A measuring device comprising a bridge sensor (Z1, Z2, Z3, Z4), operatively connected to processor means (MP), characterised in that it further comprises:
- a plurality of resistor (R1, R2, R3) each having a first end connected to a first node (Y) of the diagonal of the said bridge sensor (Z1, Z2, Z3, Z4), and a second end, each connected to a different terminal of the said processor means (MP),
- amplifier means (A, R) operatively connected to the said processor means (MP), operable to detect a voltage present on the diagonal (X, Y) of the said bridge sensor (Z1, Z2, Z3, Z4),
the said processor means (MP) being configured selectively to connect and disconnect each of the said plurality of resistors (R1, R2, R3), connected to the said first node (Y), to at least one voltage source (VAL, GND) with a view to nullifying the said voltage present on a diagonal (X Y) of the said bridge sensor (Z1, Z2, Z3, Z4).

2. A device according to Claim 1, characterised in that the said processor means (MP) are configured in such a way as to effect, for each resistor of the said plurality of resistors (R1, R2, R3), an operation chosen from the group comprising:
- connecting the said second end of the said resistor to a first voltage source (VAL),
- connecting the said second end of the said resistor to a second voltage source (GND), different from the said first voltage source (VAL),
- leaving the said second end of the said resistor unconnected.

3. A device according to Claim 2, characterised in that the said first (VAL) and second (GND) voltage sources are the supply voltages of the said bridge sensor (Z1, Z2, Z3, Z4).

4. A device according to Claim 3, characterised in that the values of the said plurality of resistors (R1, R2, R3), are related to one another according to an arthmetic progression.

5. A device according to Claim 3, characterised in the values of the said plurality of resistors (R1, R2, R3) are related to one another according to a geometric progression.

6. A device according to Claim 5, characterised in that the values of the said plurality of resistors (R1, R2, R3) are related to one another as whole powers of two.

7. A device according to Claim 5 or Claim 6, characterised in that the said amplifier means (A, R) comprise an operational amplifier (A) having differential inputs connected to two nodes of the diagonal (X, Y) of the said bridge sensor (Z1, Z2, Z3, Z4).

8. A device according to Claim 7, characterised in that the said processor means (MP) comprise analogue-to-digital convertor means connected to the output (OUT) of the said operational amplifier (A).
